# EUROPEAN PATENT APPLICATION

(11) **EP 1 444 880 A1**
(43) Date of publication of application: **11.08.2004**
(21) Application number: 04388004.6
(22) Date of filing: 20.01.2004
(51) Int. Cl.: A01D 57/20

(54) **A towed mower**

(30) Priority: 20.01.2003 DK 200300055
(71) Applicant: JF-Fabriken - J. Freudendahl A/S, 6400 Sonderborg (DK)
(72) Inventor: Freudendahl, Jan, 6400 SONDERBORG (DK)
(74) Representative: Jorgensen, Bjorn Barker

(57) **Abstract**

The towed mower has an elongate carrier frame (1), mowing means (2) provided along an axis extending in the longitudinal direction of the carrier frame, a draw bar (3) hinged at one end to the carrier frame (1) by means of a hinge (4) with a vertical hinge axis and placed at one end of the carrier frame (1). Two working wheels (7, 8) are arranged at respective ends of the carrier frame (1) for carrying the mower during operation, whereby the mower is advanced in a direction (9) transverse to the longitudinal direction of the carrier frame (1), a first working wheel (7) closest to the hinge (4) being arranged laterally outside the track of the mowing means (2) during operation, and a second working wheel (8) being arranged within the track of the mowing means (2). A conveyor (10) is provided for transporting in a transport direction transverse to said advancing direction (9) material mowed by the mowing means (2) and putting down this material alternately at the first and the second working wheels (7, 8) between the respective tracks of the working wheels.

## Description

The present invention relates to a towed mower having an elongate carrier frame, mowing means provided along an axis extending in the longitudinal direction of the carrier frame, a draw bar hinged at one end to the carrier frame by means of a hinge with a vertical hinge axis and placed at one end of the carrier frame, said draw bar being at its other end adapted to be connected with a tractor, two working wheels at respective ends of the carrier frame for carrying the mower during operation, whereby the mower is advanced in a direction transverse to the longitudinal direction of the carrier frame, a first working wheel closest to the hinge being arranged laterally outside of the track of the mowing means during operation, and a second working wheel being arranged inside of the track of the mowing means.

A mower of this kind is known from DK-B-173603, which discloses a mower, which, moreover, is provided with transport wheels, which can be raised and lowered, to make transport of the mower possible in a direction transverse to the advancing direction during operation. This known mower is furthermore provided with windrow shields, which makes an adjustment of the positioning and the width of a windrow within the track of the mowing means possible.

It is known in connection with mowing means having a working width of approx. 3 m to put down windrows from the mower asymmetrically in such a manner that two windrows put down during two succeeding field passes can be picked up simultaneously by a pick-up having a working width of approx. 3 m. Said working width of approx. 3 m is among others due to a practical limit, on account of the maximum limits for transport width which are laid down in the traffic regulations in most countries.

It is furthermore known to use a conveyor for moving cut crop laterally in order to be able to place windrows more precisely and more collected, also from equipment having a bigger working width.

Examples of towed mowers having the draw bar hinged at one side of the mower and having a transverse conveyor are thus disclosed in US-A-2 850 863, where the windrow is put down in a fixed position at one side of the header, as well as in GB-A-2 077 562, EP-A-0 439 991 and US-A-5 351 468, in which the windrow alternately is placed outside and within the track of the mower, in which connection the crop, in order to be laid out outside of the track of the mower, is to pass one of the working wheels, which makes a demand on the conveyor increasing the costs thereof one way or the other.

The object of the invention is to provide a mower of the kind mentioned by way of introduction, by means of which it becomes possible to place two windrows from two succeeding field passes sufficiently close together to be collected simultaneously by a pick-up having an ordinary working width.

This object is met by a mower as mentioned above, said mower having a conveyor for transporting in a transport direction transverse to said advancing direction material cut by the mowing means and putting down this material alternately at the first and the second working wheels between the respective tracks of the working wheels.

The invention is based on the realisation that because of the fact that the working wheel closest to the hinge is positioned outside the track of the working means, it is possible to put down two windrows from each one of two succeeding field passes with a mutual distance corresponding to a wheel width (the width of the widest wheel, which is to travel between the two windrows - most often the rear wheel of the tractor), as it is undesirable to drive on the windrows. This makes it possible even in connection with mowers having a very big working width, for instance 6 m, to reduce the total width of two neighbouring windrows and the necessary distance between them so much, for instance to 2.8 m, that a pick-up having an ordinary working width may pick up the two windrows simultaneously.

The conveyor is preferably of the kind comprising a supporting surface running in the transport direction. In particular, the conveyor comprises a number of parallel rollers rotating about their axes or a conveyor belt.

The rollers or the conveyor belt may be provided with carriers for the transported material.

In a preferred embodiment the conveyor extends in the area between the working wheels. This gives a compact construction, which entails saving of material.

The conveyor is preferably displaceable to-and-fro in its transport direction. In this way it may be adapted to receive cut crop over most of the working width of the mowers apart from the place, where the crop is deposited.

The travelling direction of the supporting surface is preferably reversible. In this manner, it becomes easy to effect the depositing alternately to one side and to the other side.

The mower is preferably provided with transport wheels, which can be raised and lowered, on either side of the carrier frame for carrying the mower during transport substantially in the longitudinal direction of the carrier frame, the end, to which the draw bar is hinged, being foremost. This makes it possible to construct the mower with a bigger working width than the transport width allowed on public roads.

The first and the second working wheels are placed substantially at the same distance from their respective adjacent edge of the track of the mowing means. This contributes to making it possible to minimize the distance between two neighbouring windrows.

The conveyor is preferably suspended in pivot arms having substantially vertical pivot axes. This allows a displacement in the transport direction and the swinging of the conveyor out of the area of the transport wheels in transport position.

The invention is in particular directed on mowers, in which the mowing means are cutter discs, and in which throwing means preferably adapted to throw the cut crop onto the conveyor are present, the throwing means suitably comprising a conditioning and throwing rotor.

The invention will now be explained in detail in the following by means of an example of an embodiment with reference to the schematic drawings, in which
Fig. 1 shows a mower according to the invention, and
Fig. 2 the mower according to Fig. 1 under two succeeding field passes during harvesting.

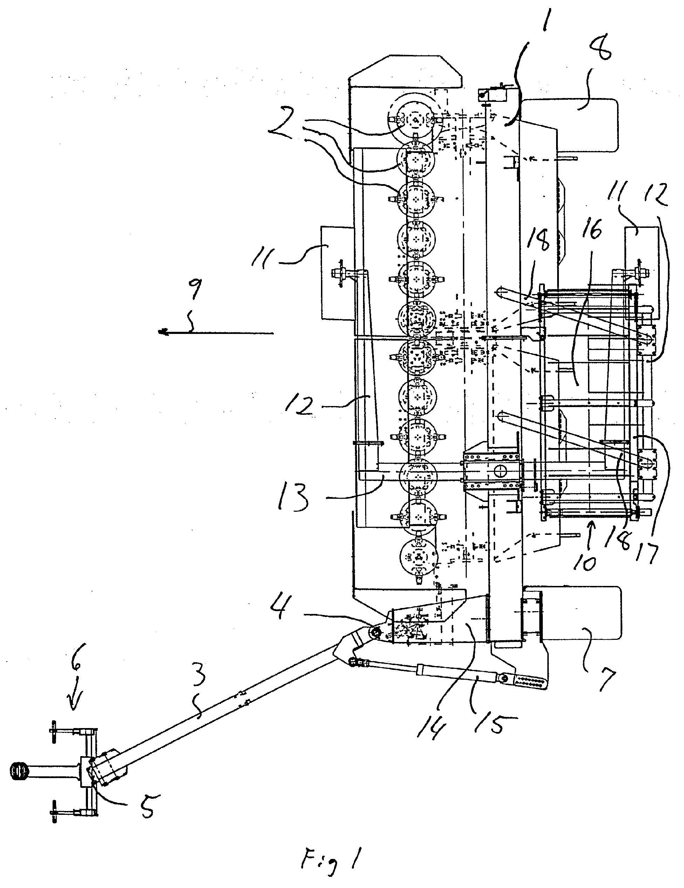

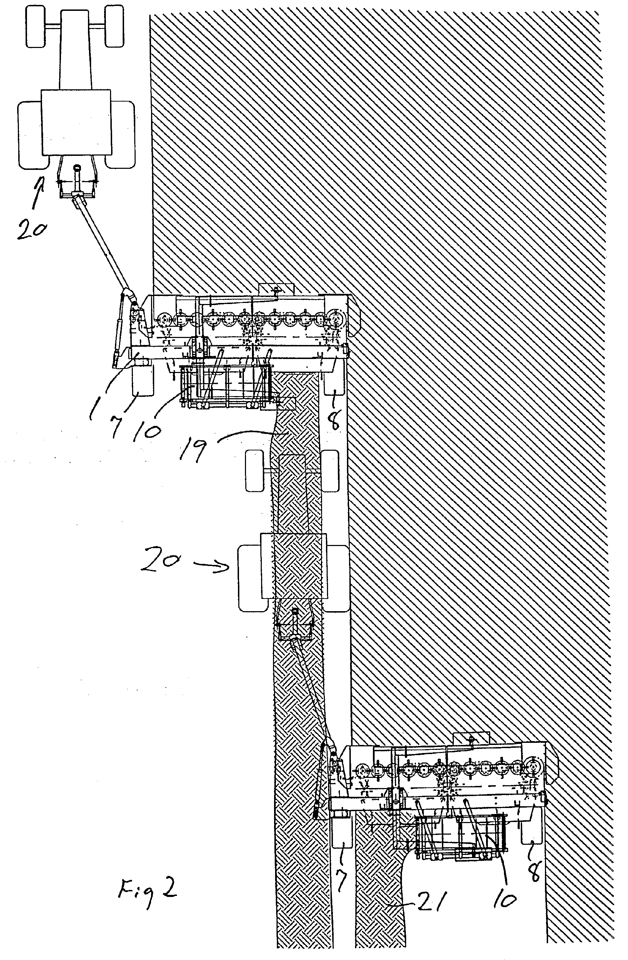

Fig. 1 shows a towed mower having an elongate carrier frame 1 and mowing means in the form of cutter discs 2 provided in a row along an axis extending in the longitudinal axis of the carrier frame. A draw bar 3 is hinged at one end to the carrier frame 1 by means of a hinge 4 with a vertical hinge axis and positioned at one end of the carrier frame 1, said draw bar 3 carrying at one end a connecting device 6, which is pivotal about a vertical axis 5, for connection with a tractor. Two working wheels 7, 8 are each provided at respective ends of the carrier frame 1 to carry the mower during operation, whereby the mower is advanced in a direction 9 transverse to the longitudinal direction of the carrier frame 1, a first working wheel 7 closest to the hinge 4 being positioned laterally outside the track of the mowing means 2 during operation, see Fig. 2, and a second working wheel 8 positioned within the track of the mowing means 2.

A conveyor 10 with a transport direction transverse to said advancing direction 9 is adapted to transport material cut by the mowing means 2 and to put down this material alternately at the first and the second working wheels between the respective tracks of the working wheels.

The mower has transport wheels 11 for transporting the mower in a direction perpendicular to the advancing direction 9 during operation. These transport wheels 11 are mounted on each their respective arm 12, which is in turn mounted at respective ends of a pivotal shaft 13 mounted perpendicularly to the carrier frame 1. By turning of the shaft 13 the transport wheels 11 may be raised and lowered between a raised, inactive position, which is shown in the figures, and a lowered, active position, in which they carry the mower.

With the exception of the conveyor 10, the mower shown in the figures corresponds substantially to the mower described in the above-mentioned DK-B-173601.

The hinge 4 of the draw bar is placed on a bracket 14 on the carrier frame 1, and the draw bar can be swung relative to the bracket 14 and the carrier frame 1 by means of a hydraulic cylinder 15.

Behind the row of cutter discs 2 a conditioning and throwing rotor (not shown) is provided in a manner known per se, said rotor throwing cut material up onto the conveyor 10. Said rotor may, also in a manner known per se, be provided with augers pulling material cut by the outermost cutter discs in the row towards the middle of the mower.

The conveyor 10 may be of a substantially known construction and may comprise a substantially horizontal conveyor belt 16, which by means (not shown) may be driven optionally in one direction or the other transverse to the advancing direction 9. The conveyor belt 16 is carried by a frame structure 17, which is in turn carried by two parallel carrier arms 18, which are hinged to the carrier frame 1 and to the rear edge of the frame structure 17 of the conveyor belt 16, the conveyor belt 16 being pivotal to and fro between the working positions shown in Fig. 2. By moving the conveyor 10 as far as possible towards the second working wheel 8, it is brought outside the track of the rear transport wheel 11 and its arm 12, when the transport wheels 11 are lowered.

With reference to Fig. 2, the mower described works in the following way.

During a first field pass the conveyor 10 is displaced towards the left, seen relative to the advancing direction 9, and the mower therefore puts down a windrow 19 close to the second working wheel 8.

During the next field pass the wheel 20 of a towing tractor steps over the windrow 19, the conveyor 10 is displaced to the right working position, seen relative to the advancing direction 9, and the mower puts down a second windrow 21 close to the first working wheel 7, which now travels in the track of the first working wheel 8 from the first field pass. Therefore, two windrows 19 and 21 are deposited at a mutual distance, which corresponds to only a single wheel width. The total width of the two cut windrows and their mutual distance are, therefore, not too wide to allow a simultaneous subsequent picking up of the two windrows by means of an ordinary pick-up.

## Claims

1. A towed mower having an elongate carrier frame (1); mowing means (2) provided along an axis extending in the longitudinal direction of the carrier frame, a draw bar (3) hinged at one end to the carrier frame (1) by means of a hinge (4) with a vertical hinge axis and placed at one end of the carrier frame (1), said draw bar (3) being at its other end adapted to be connected with a tractor (20), two working wheels (7, 8) at respective ends of the carrier frame (1) for carrying the mower during operation, whereby the mower is advanced in a direction (9) transverse to the longitudinal direction of the carrier frame (1), a first working wheel (7) closest to the hinge (4) being arranged laterally outside the track of the mowing means (2) during operation, and a second working wheel (8) being arranged within the track of the mowing means (2), **characterized in** a conveyor (10) for transporting in a transport direction transverse to said advancing direction (9) material cut by the mowing means (2) and putting down this material alternately at the first and the second working wheels (7, 8) between the respective tracks of the working wheels.

2. A towed mower according to claim 1, **char-acterized in that** the conveyor (10) comprises a supporting surface running in the transport direction.

3. A towed mower according to claim 2, **char-acterized in that** the conveyor (10) comprises a number of parallel rollers rotating about their axes or a conveyor belt (16).

4. A towed mower according to claim 3, **char-acterized in that** the rollers or the conveyor belt (16) are provided with carriers for the transported material.

5. A towed mower according to claims 1-4, **characterized in that** the conveyor (10) extends in the area between the working wheels (7, 8).

6. A towed mower according to claims 1-5, **characterized in that** the conveyor (10) is displaceable to-and-fro in its transport direction.

7. A towed mower according to claims 2 and 3-6, **characterized in that** the travelling direction of the supporting surface is reversible.

8. A towed mower according to claims 1-7, **characterized in** transport wheels (11), which can be raised and lowered, mounted on either side of the carrier frame (1) for carrying the mower during transport substantially in the longitudinal direction of the carrier frame, the end, to which the draw bar (3) is hinged, being foremost.

9. A towed mower according to claims 1-8, **characterized in that** the first and the second working wheels (7,8) are placed substantially at the same distance from their respective adjacent edge of the track of the mowing means.

10. A towed mower according to claims 1-9, **characterized in that** the conveyor (10) is suspended in pivot arms (18) having substantially vertical pivot axes.
